# EUROPÄISCHE PATENTSCHRIFT

(11) **EP 3 284 582 B1**
(45) Veröffentlichungstag und Bekanntmachung des Hinweises auf die Patenterteilung: **07.11.2018**
(21) Anmeldenummer: 17186693.2
(22) Anmeldetag: 17.08.2017
(51) Int. Cl.: B29C 65/48, B29C 65/02, B65C 3/26, B65B 7/14, B65D 35/14, B65D 35/24, B29C 65/10, B29C 65/08, B29C 65/14, B29C 65/16, B29C 65/18, B29L 23/20

(54) **VERFAHREN ZUR HERSTELLUNG EINER MIT EINEM ETIKETT VERSEHENDEN KUNSTSTOFFQUETSCHTUBE**
METHOD OF MANUFACTURING A PLASTIC COLLAPSIBLE TUBE WITH A LABEL
PROCÉDÉ DE FABRICATION D'UN TUBE DÉFORMABLE EN MATIÈRE PLASTIQUE MUNI D'UNE ÉTIQUETTE

(30) Priorität: 19.08.2016 DE 102016115401
(43) Veröffentlichungstag der Anmeldung: 21.02.2018
(73) Patentinhaber: X-Label GmbH, 42653 Solingen (DE)
(72) Erfinder: Hantel, Gero-Constantin, 42369 Wuppertal (DE)
(74) Vertreter: Patentanwälte Vomberg & Schart

(56) Entgegenhaltungen:
- EP-A2- 1 949 351
- WO-A1-2014/104239

## Beschreibung

Die Erfindung betrifft ein Verfahren zur Herstellung einer mit einem bis in den Sieglungsbereich reichenden Etikett versehenden Kunststoffquetschtube, bei der nach dem Befüllen über ein offenes Ende anschließend das offene Ende durch Verschweißen versiegelt wird.

Kunststoffquetschtuben dienen seit langem als Verpackung für zähflüssige Massen, insbesondere Pasten unterschiedlicher Art wie Zahnpasta, Handcreme, Gel oder ähnliche dickflüssige Massen, die im Haushalt, in der Kosmetik oder im handwerklichen Bereich verwendet werden. Die Kunststoffquetschtuben bestehen im Regelfall aus thermoplastischen Polymeren mit Polyethylen oder Polypropylen. Die Kunststoffquetschtuben können aus einer ein- oder mehrlagigen Folie bestehen, die beispielsweise durch Extrusion oder Koextrusion herstellbar ist. Die Kunststofffolien werden nach dem Zuschnitt zu einem rohrförmigen Körper ausgebildet, an dessen erstem Ende ein Kopfbereich mit einem Deckel- oder Schraubverschluss befestigt wird. Ein solcher Tubenrohling ist prinzipiell zur Aufnahme einer Paste der eingangs genannten Art geeignet, die über das offene Ende eingefüllt wird. Nach dem Befüllen wird nach dem Stand der Technik das offene Ende durch Verschweißen verschlossen. Hierzu wurden zunächst beheizte Backen oder Klauen verwendet, welche sowohl die für die Verschweißung notwenige Wärme als auch den aufzuwendenden pressdruck liefern, Alternativ hierzu ist es auch möglich, die bei der Verschweißung notwenige Wärme durch andere Energiequellen aufzuwenden, beispielsweise durch Wärme-, Infrarot- oder Laserstrahlung, elektromagnetische Wellen oder Ultraschallwellen.

Um die Außenfläche der Kunststoffquetschtube im Versiegelungsbereich zu schonen, ist man jedoch seit langem dazu übergegangen, die Innenfläche der zu verschließenden Tuben zu erhitzen und anschließend über aufeinander zu bewegbare Pressbacken den für die Versiegelung notwenigen Pressdruck aufzuwenden. Insbesondere die DE 34 01 959 A1 beschreibt ein Verfahren und eine Vorrichtung, bei denen die Innenflächenerwärmung mittels Heizluftzufuhr erfolgt. Dieses Verfahren hat den Vorteil, dass die für das Versiegeln notwendige Wärme gezielt an die Flächen gebracht werden kann, die miteinander verschmelzen sollen. Durch diese Maßnahme wird die Außenfläche des Siegelungsbereiches der Tube vor einem übermäßigen Wärmeeintrag geschützt.

Es ist nach dem Stand der Technik ferner bekannt, dass Tuben mit Firmenlogos, Inhaltshinweisen, Marken oder auch farbiger Aufmachung versehen werden, um das für den Kauf mitentscheidende Tubendesign zu verbessern. Neben dem Foliendruck hat sich insbesondere die Etikettierung der Tube durchgesetzt. Die Etiketten können grundsätzlich aus beliebigen flexiblen und klebfähigen Materialien bestehen, wobei sich insbesondere Kunststofffolien zur Etikettierung bewährt haben.

Zur haftenden Verbindung der Etiketten mit Tuben werden Klebstoffe verwendet. Das zumeist aus einer Kunststofffolie bestehende Etikett wird auf einer Seite mit einem Klebstoff beschichtet, der z. B. als wässrige Dispersion oder in Form einer lösungsmittelhaltigen Zubereitung aufgetragen wird und bei Raumtemperatur die klebenden Eigenschaften besitzt. Auf einem Werkstoff mit einer hohen Oberflächenenergie wird in der Regel eine gute Klebrigkeit erzielt, weshalb bei niedrigenergetischen Oberflächen, wie sie z. B. bei Polyolefinen wie Polyethylen oder Polypropylen vorliegen, häufig eine Oberflächenvorbehandlung vor dem Klebstoffauftrag, insbesondere mittels einer Plasma- oder Corona-Vorbehandlung durchgeführt wird.

Darüber hinaus sind auch Schmelzklebstoffe bekannt, worunter lösungsmittel- und wasserfeie thermoplastische Klebstoffsysteme verstanden werden, die sich durch Aufwärmen verflüssigen lassen und beim Abkühlen wieder verfestigen. Solche Schmelzklebstoffe können nur im geschmolzenen Zustand, das heißt nach entsprechender Temperaturerhöhung appliziert und durch Wärmeentzug verfestigt werden. Der Vorteil solcher Schmelzklebstoffe besteht darin, dass eine sehr schnelle Verfestigung möglich ist. Durch eine Temperaturerhöhung wird der Schmelzklebstoff aktiviert, wobei sich das bei Raumtemperatur nicht klebrige Haftmittel in ein klebriges Haftmittel verändert. Eine solche Erhitzung kann insbesondere durch Zufuhr von Heißluft durchgeführt werden. Typische Aktivierungstemperaturen für Schmelzklebstoffe liegen zwischen 100°C und 150°C. Die Zeit, während dessen der Haftstoff klebrig bleibt, liegt je nach Material zwischen 0,2 und 10 sec. Verwendete Schmelzklebstoffe besitzen als Haftmittel Copolymere aus Ethylen und Vinylacetat, Ethylenvinylacetat (EVA), Styrol-Butadien-Kautschuk und Kohlenwasserstoff-Kunstharze, wie insbesondere Kohlenwasserstoff-Rosin oder Kunstharz.

Zunächst wurden solche Etiketten verwendet, die auf der Tubenmantelaußenfläche aufgeklebt wurden, häufig endeten diese Etiketten vor dem Versiegelungsbereich, was den Vorteil hatte, dass das Etikettenmaterial in den Versiegelungsvorgang nicht einbezogen wurde. Seit 2003 wurden auf dem Markt auch solche Kunststoffquetschtuben angeboten, die vollflächig etikettiert waren, das heißt, bei denen das Etikett auch den Versiegelungsbereich vollflächig überdeckte. Solche Etiketten erlaubten eine farblich homogene Gestaltung der Kunststoffquetschtube bis in den Versiegelungsbereich, wobei die Außenfarbe der Kunststoffquetschtube allein durch das verwendete Etikett bestimmt werden konnte. Das für den Tubenrohling (ohne Etikett) verwendete Material konnte somit beliebig gewählt werden, Um zu verhindern, dass beim Versiegelungsprozess das Etikett beschädigt oder unansehnlich gemacht wurde, war es erforderlich, das Heizluftverfahren nach der DE 3401959 A1 behutsam anzuwenden, um zu verhindern, dass die eingebrachte Wärme zu einem Ablösen des Etikettes, zur Blasenbildung oder sonstigen Verwerfungen im Versiegelungsbereich führte. Solche vollflächig etikettierten Tuben werden beispielsweise in der FR 2741043, in der EP1949351 oder in der US2016130058 beschrieben.

Die Kunststoffquetschtuben sind elastisch, so dass sie ihre Tubenform auch nach dem Auspressen der gewünschten Pastenmenge wieder einnehmen und somit der Werbeaufdruck auf der Tube bis zum vollständigen Verbrauch des Inhalts erhalten bleibt. Aus optischen Gründen sollte auch beim wiederholten Auspressen der Tube eine ausreichende Haftung des Etiketts im Versiegelungsbereich gewährleistet sein. Es ist Aufgabe der vorliegenden Erfindung, ein Verfahren anzugeben, bei dem die Haftung des Etiketts im Versiegelungsbereich verbessert wird, so dass sowohl beim Versiegeln als auch beim späteren Gebrauch der Tube Etikettablösungen sowie Wellen- oder Blasenbildungen im Versiegelungsbereich dauerhaft vermieden werden.

Diese Aufgabe wird durch ein Verfahren nach Anspruch 1 gelöst, bei dem das Etikett vor dem Verschweißen nur in einem außerhalb des Versiegelungsbereiches liegenden Bereiches mit der Tube verbunden ist. Der übrige Bereich des Etiketts wird erst durch Wärmeeinwirkung beim Versiegeln an der Tube befestigt. Hierzu bieten sich mehrere Möglichkeiten an, nämlich zum einen, dass die der Tube zugewandte Seite des Etiketts und/oder die Außenwand der Tube im Siegelungsbereich vor dem Versiegeln durch Wärmezufuhr plastifiziert und mit der Versiegelung ein Materialverbund des Etiketts und der Tube im Versiegelungsbereich geschaffen wird oder dass der Übrige Bereich des Etiketts mittels eines Klebstoffes an der Tube befestigt wird, der erst durch das Verschweißen oder beim oder nach dem Verschweißen durch Wärme aktiviert wird. Im erstgenannten Fall wird die Eigenschaft des aus einer Kunststofffolie bestehenden Etiketts oder der Tube ausgenutzt, dass nach einer Materialerweichung auf der Oberfläche und anschließendem Anpressen dieser weichen Oberflächenschicht ein widerstandsfähiger Verbund zwischen dem Etikett und dem Versiegelungsbereich der Tube geschaffen werden kann. Nach einer weiteren Ausführungsvariante wird als Ausgangsmaterial ein Etikett gewählt, das aus einer mit einem Schmelzklebstoff auf einer Seite vollflächig überzogenen ein- oder mehrlagige Folie besteht, auf die nur in einem Teilbereich ein bei Raumtemperatur klebend wirksamer Dispersionsklebstoff aufgetragen und anschließend dieser Teilbereich mit einer Tube außerhalb des späteren Siegelungsbereiches haftend verbunden wird.

Unter einem Schmelzklebstoff werden alle Klebstoffe verstanden, die ihre Klebeigenschaft erst bei höheren Temperaturen entfalten, das heißt deren Klebrigkeit erst durch Wärmezufuhr entsteht, wohingegen solche Schmelzklebstoffe bei Raumtemperatur keine Klebrigkeit besitzen. Zu dieser Gruppe gehören sogenannte Hotmelts aber auch lösungsmittel-, wasser- oder UV-basierende Arcylate mit entsprechenden Eigenschaften.
Nach dem Befüllen einer Tube wird diese an dem noch offenen Ende verschweißt, wobei durch vorherige Wärmezufuhr auf die Tubeninnenseite und anschließendes Druckaufbringen mittels Pressbacken der Schmelzklebstoff aktiviert wird, so dass das Etikett nunmehr über seine gesamte Fläche, also auch im Versiegelungsbereich, mit der Tube haftend verbunden wird.

Nach der Alternativlösung wird anders als zum Beispiel in der FR 2741043 beschrieben das Etikett nicht vollflächig auf den Tubenrohling geklebt, sondern nur in den Bereichen, die außerhalb der (späteren) Versiegelungszone liegen. Die Verklebung des Etiketts im Versiegelungsbereich findet hingegen erst beim oder kurz nach dem Verschweißen dadurch statt, dass ein vorhandener Klebstoff durch Wärme aktiviert wird. Der Klebstoff, der erst durch Wärmezufuhr oberhalb einer definierten Mindesttemperatur aktiv wird, befindet sich vorzugsweise auf dem Etikett im Versiegelungsbereich, kann jedoch auch auf dem Tubenrohling im Versiegelungsbereich oder auf "beiden Seiten" aufgebracht sein.

Solche durch Wärmezufuhr aktivierbare Klebstoffe sind nach dem Stand der Technik bekannt, insbesondere gibt es sogenannte Heissleimer, die bei Raumtemperatur fest und nicht klebend und bei höheren Temperaturen flüssig werden, wobei sie die Klebwirkung entfalten. Der thermoaktivierbare Kleber kann beispielsweise auf der Basis von Polyester und/oder Polyvinyl zusammengesetzt sein oder auf EVA basieren und entsprechend der Zusammensetzung eine Aktivierungstemperatur zwischen 100°C und 150°C besitzen. Diese Aktivierungstemperatur liegt außerhalb der Bereiche, die beim Befüllen des etikettierten Tubenrohlings und nach der Versiegelung erreicht werden.

Der besondere Vorteil des erfindungsgemäßen Verfahrens besteht darin, dass die optimalen Klebeigenschaften erst durch das Verschweißen oder beim oder nach dem Verschweißen gezielt ausgelöst werden, womit die Haftung des Etiketts im Versiegelungsbereich verbessert wird. Insbesondere werden Lufteinschlüsse, Wellenbildungen oder Ablösungen vermieden. Weiterhin vorteilhaft ist die Tatsache, dass ein beim Verschweißen bei nach dem Stand der Technik bekannten Verfahren drohender Kleberaustritt, durch welchen das Befüllgut kontaminiert werden könnte, verhindert wird. Durch gezielte Kleberauswahl kann auch das Verschmelzen der Materialien zwischen Etikett und Tubenrohling verbessert werden. Die Ausgangsmaterialien (Etikett und Tubenfolie) sind besser zu schneiden, weil vor dem Versiegelungsvorgang an den Schneidkanten noch keine Verklebung zwischen Etikett und Folie vorliegt.

Die vielfach je nach Materialwahl des Tubenrohlings erforderliche Oberflächenvorbehandlung zur Erhöhung des sogenannten Dyne-Wertes kann entfallen. Erfindungsgemäß kann die zur Plastifizierung oder zur Aktivierung des Klebstoffs im Versiegelungsbereich erforderliche Wärme durch das Erhitzen der Innenseite der Tube und/oder durch Klemmbacken selbst beim Verschweißen eingebracht werden. Anders als bei nach dem Stand der Technik bekannten Verfahren, bei denen der Kunststofftubenrohling vollflächig etikettiert ist, kann eine Schädigung des Etiketts im Versiegelungsbereich deshalb nicht eintreten, weil der Klebstoff erst beim Versiegeln oder kurz danach seine Wirkung entfaltet. Die Klebstoffaktivierung beziehungsweise Klebstoffwirkung kann durch den Anpressdruck der Klemmbacken unterstützt beziehungsweise verstärkt werden.

Die neuartige erfindungsgemäße Verfahrenstechnik ermöglicht die Kombination beliebiger Materialien für den Tubenrohling und das Etikett. Vorzugsweise bestehen das Etikett aus Polyethylen oder Polypropylen und/oder der Schmelzklebstoff aus einem Polymer-, insbesondere einem EVA-basierenden Klebstoff.

Nach einer weiteren Ausführungsform der Erfindung besteht das nur außerhalb des späteren Siegelungsbereiches mit einem Klebstoff versehende Etikett aus einer Inmold-Folie oder einem Inmold-Folienverbund, wobei die Inmold-Folie oder der Inmold-Verbund im klebstofffreien Bereich beim Verschweißen der Tube infolge der Wärmeeinwirkung zu einer festen Verbindung verschmilzt. In diesem Fall bildet die Inmold-Folie selbst das Material, welches nach dem Befüllen der Tube an dem offenen Ende durch Versiegeln abdichtend verschlossen wird.

Im Rahmen der vorliegenden Erfindung liegen auch solche Ausführungsbeispiele, bei denen das Etikett im späteren Versiegelungsbereich mit einem Lack beschichtet ist, der unter Wärmeeinwirkung beim Versiegeln schmilzt und mit der Tube eine feste Verbindung eingeht.

Ausführungsbeispiele der Erfindung werden im Folgenden anhand der Zeichnungen erläutert. Es zeigen:
- Fig. 1: eine schematische Darstellung einer Tube mit Schraubverschluss,
- Fig. 2: eine Querschnittsansicht entlang der Schnittlinie AA der in Fig. 1 dargestellten Tube vor dem Versiegeln und
- Fig. 3: eine Querschnittsansicht durch den unteren Bereich der Tube mit unterschiedlichen Klebestoffaufträgen.

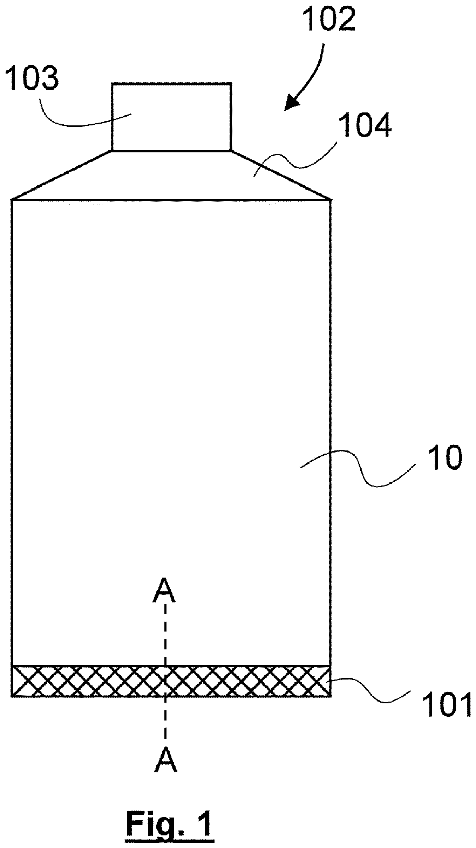

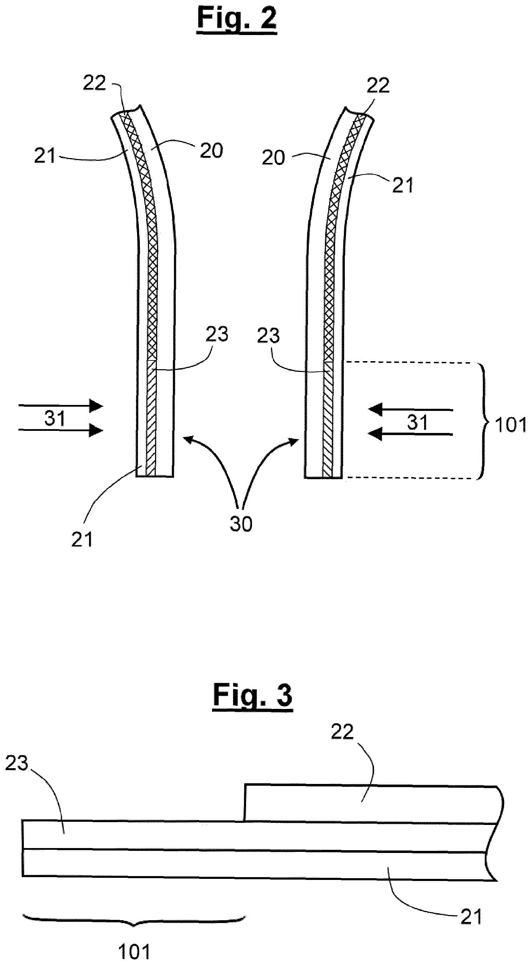

Die in Fig. 1 dargestellte Kunststofftube besteht aus einem Tubenkörper 10, der vollflächig bis in den Versiegelungsbereich 101 mit einem Etikett überzogen ist. Die Tube besitzt einen Tubenkopf 102 mit einem Schraubverschluss 103. Die Tube 10 ist zumindest bis in den Versiegelungsbereich über der gesamten rechteckig dargestellten Fläche mit einem Etikett überzogen, das bis zum Rand des Konusbereiches 104 oder sogar darüber hinaus erstreckt. Wie sich im Detail aus Fig. 2 ergibt, besteht die Tube aus einer Folie 20, zum Beispiel aus Polyethylen oder Polypropylen. Zur Haftung des Etiketts 21, das auf der Tubenaußenseite angeklebt ist, werden unterschiedliche Klebstoffe 22 und 23 verwendet. Das Etikett ist mittels des Klebstoffes 22 an der Tubenfolie 20 angeklebt, wohingegen zwischen der Folie 20 und dem Klebstoff 23, der auf dem Etikett 21 im Versiegelungsbereich haftet, vor dem Versiegeln noch keine Verbindung besteht. Diese Klebeverbindung wird erst beim Verschweißen im Bereich 101 hergestellt, indem Heißluft, wie durch die beiden Pfeile 30 dargestellt, auf die Innenseite der Folie 20 im Versiegelungsbereich 101 gelenkt wird und gleichzeitig über Pressbacken (siehe jeweilige Doppelpfeile 31) ein Pressdruck aufgebracht wird, der die beiden Folienenden zusammenfügt. Durch die Hitzeeinwirkung plastifiziert die Innenseite der Folie 20, die dann unter dem Pressdruck zu einem dichten Tubenende verschweißt wird. Gleichzeitig führt die Wärmeeinwirkung zu einer Aktivierung des Klebstoffes 23, so dass im Bereich 101 zwischen der Folie 20 und dem Etikett 21 ebenfalls ein haftender Verbund hergestellt wird, so dass nach dem Entfernen der Tube aus der Verschweißapparatur und entsprechender Abkühlung die Tube dicht verschlossen ist und sich das Etikett vollflächig haftend bis in das Versiegelungsende erstreckt.

Eine Alternative zu der in Fig. 2 dargestellten Ausführungsform der Erfindung ist Fig. 3 zu entnehmen, die einen Querschnitt durch ein Etikett im Versiegelungsbereich zeigt. Auf dem Etikett ist an der Seite, die später auf der Folie 20 befestigt wird, vollflächig ein Klebstoff aufgetragen, der durch Hitze aktiviert wird. Auf diesem Klebstoff 23 ist ein zweiter Klebstoff 22 aufgetragen, der jedoch nicht bis zum Ende, nämlich bis zur Zone 101 reicht, sondern ähnlich wie in Fig. 2 dargestellt, zuvor endet. Der Klebstoff 22, der bereits bei Zimmertemperatur wirksam ist, dient zur Befestigung des Etikettes nach Fig. 3 an der in Fig. 3 nicht dargestellten Kunststofffolie 20. Der Bereich 101 ist ausgespart, so dass in diesem Bereich das Etikett 21 vor dem Verschweißen noch nicht mit der Folie 20 verbunden ist. Dies geschieht erst bei Hitzeeinwirkung und der Verwendung der Pressbacken.

Der Klebstoff 23 kann auch ein hitzeaktivierbarer Lack sein.

Das Etikett 21 kann auch aus einer Inmold-Folie bestehen, die außerhalb des Versiegelungsbereiches 101 mit einem üblichen Klebstoff 22 an der Folie 20 der Tube haftend befestigt (angeklebt) ist. Die Inmold-Folie, aus der das Etikett besteht, ist im Versiegelungsbereich 101 klebstofffrei, wobei durch Wahl des Folienmaterials die Befestigung der Inmold-Folie auf dem Folienmaterial 20 der Tube durch die Wärmeeinwirkung beim Verschweißen unter Druck herbeigeführt wird. Die Erhitzung der Inmold-Folie führt zu einer Folienerweichung, durch welche das aus einer Inmold-Folie bestehende Etikett während des Verschweißens an der Tube 10 im Versiegelungsbereich 101 haftend fixiert wird.

Nach einem konkreten Ausführungsbeispiel wird aus einer ein- oder mehrschichtigen Folie zunächst ein rohrförmiger Körper gebildet, der mit einem zum Beispiel aus Polyethylen bestehenden Tubenkopf mit Deckel- oder Schraubverschluss verbunden wird. Der Tubenrohling wird zur Etikettierung auf einen Dorn geschoben. Das Etikett ist mit einem klebefähigen Auftrag versehen, der jedoch Randbereiche des Etiketts ausspart, die später im sogenannten Versiegelungsbereich liegen. In diesem Randbereich ist das Etikett mit einem Auftrag beschichtet, der einen Kleber enthält, welcher erst bei 120°C aktiviert werden kann. Falls erforderlich können Randbereiche des Etiketts und/oder des Tubenrohlings durch Schneiden bearbeitet, insbesondere begradigt werden. Der Tubenrohling mit einem nur bei einer Teilfläche angeklebten Etikett wird nunmehr in eine Befüllstation geführt, wo die vorgesehene pastöse Masse eingefüllt wird. Anschließend wird die Innenseite der Tube mit Heissluft beaufschlagt, so dass die dortigen Randzonen entsprechend erreicht werden. Die Versiegelung wird durch zwei Pressbacken vorgenommen, welche aufeinander zu bewegt werden, Sofern während dieses Pressvorgangs die für die Aktivierung des Klebers erforderliche Temperatur von 120°C erreicht wird, werden durch das Versiegeln gleichzeitig das Etikett mit der Tubenrohlingaußenfläche und die beim Versiegeln aufeinander zu bewegten Tubeninnenflächen miteinander verbunden. Die Erwärmung kann gegebenenfalls dadurch unterstützt werden, dass die Klemmbacken vorgeheizt sind. Alternativ ist es ebenso möglich, durch Laserstrahlung oder eine andere indirekte Erwärmung den auf dem Etikett im Versiegelungsbereich befindlichen Klebstoff zu aktivieren, Das beschriebene Verfahren wird bevorzugt angewendet, jedoch ist es ebenso möglich, die Aktivierung des Klebstoffs im Versiegelungsbereich in einem separaten Arbeitsgang vorzunehmen und das Etikett, zum Beispiel durch Rollen zur Verklebung an dem Tubenrohling im Verschweißungsbereich zu pressen.

Alternativ kann auch ein Etikett verwendet werden, dass aus einer ein- oder mehrlagigen Kunststofffolie besteht, die auf einer Seite vollflächig mit einem Schmelzklebstoff beschichtet ist. Dieses Etikett wird auf derselben Seite, an der sich der Schmelzklebstoff befindet, auf einer Teilfläche mit einem Dispersionsklebstoff überzogen. Anschließend wird das Etikett (bei Raumtemperatur) auf die Tube geklebt, wobei der spätere Versiegelungsbereich beim Verkleben ausgespart wird; der dort vorhandene Schmelzklebstoff ist bei einer Raumtemperatur noch inaktiv. Erst nach dem Befüllen wird dieser Klebstoff während des Verschließens des offenen Tubenendes durch ein Verschweißen unter Druck aktiviert.

## Patentansprüche

1. Verfahren zur Herstellung einer mit einem bis in den Siegelungsbereich (101) oder Teilen davon reichenden Etikett (21) versehenen Kunststoffquetschtube, bei der nach dem Befüllen über ein offenes Ende anschließend das offene Ende durch Verschweißen versiegelt wird, wobei das Etikett (21) vor dem Verschweißen nur in einem außerhalb des Siegelungsbereiches (101) liegenden Bereich mit der Tube (10) haftend verbunden ist und wobei der übrige Bereich des Etiketts (21) erst durch Wärmeeinwirkung und mittels eines Anpressdruckes beim Versiegeln an der Tube (10) haftend befestigt wird.

2. Verfahren nach Anspruch 1, **dadurch gekennzeichnet, dass** die der Tube (10) zugewandten Seite des Etiketts (21) und/oder die Außenwand der Tube (10) im Siegelungsbereich vor dem Versiegeln durch Wärmezufuhr plastifiziert und mit der Versiegelung ein Materialverbund des Etiketts (21) und der Tube (10) im Versiegelungsbereich (101) geschaffen wird.

3. Verfahren nach Anspruch 1, **dadurch gekennzeichnet, dass** der übrige Bereich des Etiketts (21) mittels eines Klebstoffes (23) an der Tube (10) befestigt wird, der erst durch das Verschweißen oder beim oder nach dem Verschweißen durch Wärme aktiviert wird.

4. Verfahren nach Anspruch 3, **dadurch gekennzeichnet, dass** der durch Wärme aktivierbare Klebstoff (23) auf das Etikett (21) aufgetragen worden ist.

5. Verfahren nach Anspruch 1 oder 3, **dadurch gekennzeichnet, dass** das Etikett (21) aus einer mit einem durch Wärme aktivierbaren Klebstoff (23) vollflächig überzogenen ein- oder mehrlagigen Folie besteht, an die in einem Teilbereich ein Dispersionsklebstoff aufgetragen und anschließend dieser Teilbereich mit der Tube (10) außerhalb des späteren Siegelungsbereiches haftend verbunden wird, bevor die Tube (10) nach dem Befüllen an dem noch offenen Ende verschweißt wird, wobei gleichzeitig der durch Wärme aktivierbare Klebstoff (23) aktiviert wird, so dass das Etikett (21) über seine gesamte Fläche mit der Tube (10) haftend verbunden ist.

6. Verfahren nach einem der Ansprüche 1 bis 5, **dadurch gekennzeichnet, dass** die zur Plastifizierung oder zur Aktivierung des Klebstoffs (23) erforderliche Wärme durch das Erhitzen der Innenseite der Tube (10) und/oder durch die Klemmbacken beim Verschweißen eingebracht wird.

7. Verfahren nach Anspruch 6, **dadurch gekennzeichnet, dass** die Klebstoffaktivierung durch den Anpressdruck der Klemmbacken unterstützt wird.

8. Verfahren nach einem der Ansprüche 1 bis 6, **dadurch gekennzeichnet, dass** das Etikett (21) aus Polyethylen oder Polypropylen und/oder der erst durch Wärmeeinwirkung aktivierbare Klebstoff (23) aus einem Polymer-, insbesondere aus einem EVA-basierenden Schmelzklebstoff besteht.

9. Verfahren nach einem der Ansprüche 1, 2 oder 6, **dadurch gekennzeichnet, dass** das nur außerhalb des späteren Siegelungsbereiches mit einem Klebstoff (23) versehene Etikett (21) aus einer Inmold-Folie oder einem Inmold-Folienverbund besteht und dass die Inmold-Folie oder der Inmold-Folienverbund im klebstofffreien Bereich infolge der Wärmeeinwirkung beim Verschweißen mit der Tube (10) zu einer festen Verbindung verschmilzt.

10. Verfahren nach einem der Ansprüche 1, 2 oder 6, **dadurch gekennzeichnet, dass** das Etikett (21) im späteren Versiegelungsbereich mit einem Lack beschichtet ist, der unter Wärmeeinwirkung beim Versiegeln schmilzt und mit der Tube (10) eine feste Verbindung eingeht.

## Claims

1. Method of manufacturing a plastic collapsible tube with a label (21) extending up to the sealing area or parts thereof, wherein subsequent after filling over an open end the open end is sealed by welding, whereby the label (21) is attached adherently only in an area lying outside of the sealing area before welding and whereby the remaining area of the label (21) is attached adherently to the tube (10) by heat influence and by the contact pressure during the welding.

2. Method according to claim 1, **characterized in that** the side of the label (21) facing the tube (10) and/or the outer wall of the tube (10) are plasticized before welding by heat supply in the sealing area and a material compound of the label (21) and the tube in the sealing are is made with the sealing.

3. Method according to claim 1, **characterized in that** the remaining area of the label (21) is adhered to the tube (10) by adhesive (23) which is activated not until welding or during or after welding by heat supply.

4. Method according to claim 3, **characterized in that** the adhesive activatable by heat is applied to the label (21).

5. Method according to claim 1 or 3, **characterized in that** the label (21) consists of a one or multi-layer-film covered with an adhesive (23) activatable by heat whereto in a partial area a dispersion adhesive is applied and subsequent this partial area is adhered to the tube (10) outside the area which will be later welded adherently, before the tube (10) after filling at the end which is still open is welded, whereby at the same time the adhesive (23) is activated by heat supply so that the label (21) is attached adherently over its whole area with the tube (10).

6. Method according to one of the claims 1 to 5, **characterized in that** the heat necessary to plasticize or the activate the adhesive (23), is introduced by heating of the inner side of the tube (10) and/or by the clamping jaws during welding.

7. Method according to claim 6, **characterized in that** the adhesive activation is aided by the contact pressure of the clamping jaws.

8. Method according to one of the claims 1 to 7, **characterized in that** the label (21) consists of polyethylene or polypropylene and/or the adhesive activatable not until heat supply consists of a polymer, in particular of a hot melt adhesive basing on EVA.

9. Method according to one of the claims 1, 2 or 6, **characterized in that** the label (21) which is applied with an adhesive (23) only outside the later welding area consists of an inmould film or an inmould film-compound and that the inmould film or the inmould film compound is melted in the adhesive-free area as a result of the heat influence during the welding with the tube (10) to a solid compound.

10. Method according to one of the claims 1, 2 or 6, **characterized in that** the label (21) is coated in the area which is welded later with a lacquer which melts when heat is supplied during welding and which coalesces with the tube (10).

## Revendications

1. Procédé de fabrication d'un tube compressible en matière plastique qui est pourvu d'une étiquette (21) s'étendant dans la zone de scellement (101) ou des parties de celle-ci, et dans lequel, après le remplissage par une extrémité ouverte, ladite extrémité ouverte est ensuite scellée par soudage, dans lequel, avant le soudage, l'étiquette (21) n'est reliée par adhérence au tube (10) que dans une zone située à l'extérieur de la zone de scellement (101), et dans lequel la zone restante de l'étiquette (21) n'est fixée par adhérence au tube (10) que par l'effet de la chaleur et au moyen d'une pression d'application lors du scellement.

2. Procédé selon la revendication 1, **caractérisé par le fait que** la face de l'étiquette (21) qui montre vers le tube (10), et/ou la paroi extérieure du tube (10) est plastifiée dans la zone de scellement avant le scellement par apport de chaleur et qu'un assemblage de matériau de l'étiquette (21) et du tube (10) est créé dans la zone de scellement (101) par le scellement.

3. Procédé selon la revendication 1, **caractérisé par le fait que** la zone restante de l'étiquette (21) est fixée au tube (10) au moyen d'une colle (23) qui n'est activée par chaleur que par le soudage ou est activée lors ou après le soudage.

4. Procédé selon la revendication 3, **caractérisé par le fait que** la colle (23) activable par chaleur a été appliquée sur l'étiquette (21).

5. Procédé selon la revendication 1 ou 3, **caractérisé par le fait que** l'étiquette (21) se compose d'un film à une ou à plusieurs couche(s) qui est revêtu sur toute la surface d'une colle (23) activable par chaleur et sur lequel est appliquée une colle à dispersion dans une zone partielle, et, ensuite, cette zone partielle est reliée par adhérence au tube (10) à l'extérieur de la zone de scellement ultérieure avant que le tube (10) soit soudé, après le remplissage, à l'extrémité encore ouverte, dans lequel, en même temps, la colle (23) activable par chaleur est activée de sorte que l'étiquette (21) est reliée par adhérence sur toute sa surface au tube (10).

6. Procédé selon l'une quelconque des revendications 1 à 5, **caractérisé par le fait que** la chaleur nécessaire pour plastifier ou activer la colle (23) est introduite en chauffant la face intérieure du tube (10) et/ou par les mâchoires de serrage pendant le soudage.

7. Procédé selon la revendication 6, **caractérisé par le fait que** l'activation de la colle est supportée par la pression d'application des mâchoires de serrage.

8. Procédé selon l'une quelconque des revendications 1 à 6, **caractérisé par le fait que** l'étiquette (21) est faite de polyéthylène ou de polypropylène et/ou que la colle (23) qui n'est activable que par l'effet de la chaleur se compose d'une colle de polymère, en particulier d'une colle à fusion à base d'EVA.

9. Procédé selon l'une quelconque des revendications 1, 2 ou 6, **caractérisé par le fait que** l'étiquette (21) qui n'est munie d'une colle (23) qu'à l'extérieur de la zone de scellement ultérieure est constituée par un film pour l'étiquetage dans le moule ou un assemblage de film pour l'étiquetage dans le moule et que le film pour l'étiquetage dans le moule ou l'assemblage de film pour l'étiquetage dans le moule fusionne, dans la zone exempte de colle, dû à l'effet de la chaleur lors du soudage, avec le tube (10) pour former un assemblage solide.

10. Procédé selon l'une quelconque des revendications 1, 2 ou 6, **caractérisé par le fait que** l'étiquette (21) est revêtue, dans la zone de scellement ultérieure, d'un vernis qui fond sous l'effet de la chaleur lors du scellement et est solidarisé au tube (10).
